# EUROPÄISCHE PATENTSCHRIFT

(11) **EP 3 787 222 B1**
(45) Veröffentlichungstag und Bekanntmachung des Hinweises auf die Patenterteilung: **11.10.2023**
(21) Anmeldenummer: 20192390.1
(22) Anmeldetag: 24.08.2020
(51) Int. Cl.: H04L 9/40, H04L 9/14, H04L 67/12, H04L 9/08, H04L 9/32

(54) **VERFAHREN ZUR GESCHÜTZTEN KOMMUNIKATION EINES FAHRZEUGS MIT EINEM EXTERNEN SERVER, VORRICHTUNG ZUR DURCHFÜHRUNG DER SCHLÜSSELABLEITUNG BEI DEM VERFAHREN SOWIE FAHRZEUG**
METHOD FOR SECURE COMMUNICATION OF A VEHICLE WITH AN EXTERNAL SERVER, DEVICE FOR CARRYING OUT THE KEY DERIVATION AS PART OF THE METHOD AND VEHICLE
PROCÉDÉ DE COMMUNICATION PROTÉGÉE D'UN VÉHICULE AVEC UN SERVEUR EXTERNE, DISPOSITIF DE MISE EN UVRE DE LA DÉRIVATION DE CLÉ DANS LE PROCÉDÉ AINSI QUE VÉHICULE

(30) Priorität: 28.08.2019 DE 102019212959
(43) Veröffentlichungstag der Anmeldung: 03.03.2021
(73) Patentinhaber: VOLKSWAGEN AG, 38440 Wolfsburg (DE)
(72) Erfinder: Winkelvos, Timo, 38173 Sickte (DE)

(56) Entgegenhaltungen:
- EP-A1- 3 157 281
- DE-A1-102017 204 538

## Beschreibung

Die Erfindung betrifft ein Verfahren zur geschützten Kommunikation eines Fahrzeugs mit einem externen Server. Der externe Server kann z.B. ein Backend-Server des Fahrzeugherstellers oder eines Dienstleisters sein, dem der Fahrzeughersteller die entsprechende Befugnis erteilt hat. Die Erfindung betrifft weiter eine Vorrichtung zur Durchführung der Schlüsselableitung bei dem Verfahren sowie ein entsprechend ausgestattetes Fahrzeug.

Die Erfindung betrifft das Gebiet der Datensicherheit im digitalen Zeitalter. Aus dem technischen Gebiet der Kryptographie sind diverse Techniken zur Verschlüsselung und zum sicheren Austausch von Daten bekannt. Die Hauptziele zum Schutz von Datenbeständen sind Vertraulichkeit (Zugriffsschutz), Integrität (Änderungsschutz), Authentizität/Fälschungsschutz und Verbindlichkeit (Nichtabstreitbarkeit). Die Erfindung wird am Beispiel des sicheren Datenaustausches zwischen einem modernen Fahrzeug und einem Internet-Dienstleister erläutert.

Dabei ergeben sich verschiedene Herausforderungen:
Asymmetrische Schlüssel sind heute die Basis für abgesicherte Kommunikationen, z.B. TLS-Kommunikation von Fahrzeugen mit Backend-Servern von Internet-Dienstleistern. Ein typisches Beispiel ist die https-Kommunikation, die für die Realisierung einer gesicherten Internet-Verbindung bei Browsern eingesetzt wird.

Derartige Verschlüsselungsverfahren werden ab dem Zeitpunkt X wertlos. Dabei betrifft der Zeitpunkt X ein Datum, an dem die sogenannten Quantencomputer mit bestimmten Eigenschaften verfügbar werden. Durch diese wird eine enorme Steigerung der Rechenleistung erwartet, weil durch das bei ihnen angewendete Superpositionsprinzip eine massive Parallelität in den Rechenoperationen möglich ist. Die Einführung dieser Quantencomputer wird sich auch auf die Methoden der Kryptographie auswirken, weil dadurch einige Verschlüsselungsmethoden angreifbar werden. Das damit verbundene Problem wird in der Fachwelt auch als "Postquantum Challenge" bezeichnet.

Aus heutiger Sicht wird eine mögliche Lösung darin gesehen, jegliche Kommunikation mit verschiedenen Backend-Servern im Internet ab dem Zeitpunkt X nur noch per 256-Bitsymmetrischer Kryptographie abzusichern. Dabei könnte z.B. der Verschlüsselungsalgorithmus AES 256 entsprechend Advanced Encryption Standard mit 256 Bit Schlüsseln eingesetzt werden. Mit Einführung von AES 256 werden dann nach dem besten derzeit bekannten Entschlüsselungsalgorithmus 2 ^{254,4} Rechenschritte benötigt. Dies wäre auch mit den ersten Generationen von Quantencomputern nicht in akzeptabler Zeit möglich.

Deshalb wird derzeit davon ausgegangen, dass zukünftig 256 Bit Schlüssel in die Fahrzeuge eingebracht werden, die für den gesicherten Datenaustausch benutzt werden sollen.

Bei symmetrischer Kryptographie besteht aber das Problem, dass die gleichen Schlüssel auch dem jeweiligen Internet-Dienstleister bekannt gegeben werden müssen. Damit ist ein Sicherheitsrisiko verbunden, und es muss eine große Anzahl von fahrzeugindividuellen Schlüsseln verteilt werden. Es besteht daher ein Bedarf, die Schlüsselverwaltung für die verschiedenen Internet-Dienstleister zu verbessern.

Die oben genannten Verfahren authentifizieren einzuspielende Software, jedoch nicht den Aufbau einer authentifizierten Kommunikation.

Aus der Patentanmeldung US 2019/0028267 A1 ist ein Schlüsselerzeugungsverfahren bekannt. Das Verfahren nutzt einen Master-Schlüssel und eine Steuergerät-ID, um einen Schlüssel zu erzeugen. Dieser Schlüssel wird zur Authentisierung genutzt. Dabei wird ein Masterschlüssel nur dazu verwendet, eine sichere Einbringung in ein Hardware-Security Modul zu gewährleisten.

Aus der WO 2018/167253 A1 ist ein Verfahren zum Protokollieren von Zustandsdaten einer Vorrichtung in einer Blockchain bekannt. Die Blockchain umfasst in einem Block ein Programmmodul mit Programminstruktionen, welches einer Vorrichtung zugeordnet ist. Bei Ausführung der Programminstruktionen wird ein dem Programmmodul zugeordneter Eintrag mit Zustandsdaten der Vorrichtung in der Blockchain erzeugt. Zusätzlich identifiziert das Programmmodul eine öffentlichen kryptographischen Schlüssel eines der Vorrichtung zugeordneten asymmetrischen Schlüsselpaars.

Aus der US 8 526 606 ist ein sicheres On-demand-Schlüsselerzeugungsverfahren für eine Fahrzeug-zu-Fahrzeug-Kommunikation bekannt.

Aus der DE 10 2015 220 224 A1 ist ein Verfahren zur geschützten Kommunikation eines Fahrzeugs bekannt.

Die Erfindung setzt sich zum Ziel, das Sicherheitsrisiko für den Einsatz der symmetrischen Kryptographie-Verfahren zur Lösung der PQC zu verringern.

Diese Aufgabe wird durch ein Verfahren zur geschützten Kommunikation eines Fahrzeugs, mit einem externen Server gemäß Anspruch 1 gelöst.

Die abhängigen Ansprüche beinhalten vorteilhafte Weiterbildungen und Verbesserungen der Erfindung entsprechend der nachfolgenden Beschreibung dieser Maßnahmen.

Das erfindungsgemäße Verfahren zur geschützten Kommunikation eines Fahrzeugs mit einem externen Server umfasst die Schritte:
- Definieren einer Anzahl von Masterschlüsseln,
- Erzeugen von Masterschlüsselreferenzen für Masterschlüssel, die für das Fahrzeug zur Schlüsselgenerierung benutzt wurden,
- Einbringen eines von dem einen der definierten Masterschlüssel abgeleiteten kryptographischen Schlüssels und der für den einen der definierten Masterschlüssel erzeugten Masterschlüsselreferenz und eines Schlüsselzustands in das Fahrzeug, wobei der Schlüsselzustand bei der Ableitung des kryptographischen Schlüssels (3422, 3462) mitberücksichtigt worden ist,
- Übertragen einer mit dem abgeleiteten kryptographischen Schlüssel signierten Nachricht, die zusätzlich mit der Masterschlüsselreferenz und dem Schlüsselzustand des Fahrzeugs versehen ist, von dem Fahrzeug zu einem externen Server,
- Ableiten des kryptographischen Schlüssels bei dem externen Server von dem Masterschlüssel, der durch die Masterschlüsselreferenz identifiziert wird, in Abhängigkeit von dem Schlüsselzustand des Fahrzeugs, wobei der Masterschlüssel vorab mittels eines sicheren Bedatungsprozesses in den externen Server eingespielt worden ist,
- Überprüfen der Authentizität der signierten Nachricht mit dem abgeleiteten kryptographischen Schlüssel bei dem externen Server.

Bei dem Verfahren wird vorausgesetzt, dass ein sicherer Prozess zur Bedatung der Backendsysteme existiert, der es ermöglicht, Schlüssel in die Backendsysteme einzuspielen, ohne dabei die Vertraulichkeit dieser Schlüssel zu gefährden. Dieser Prozess wird angewandt, um die (Domänen-) Masterschlüssel in die weltweit verteilten Dienstleistungszentren einzuspielen.

Das Verfahren hat den Vorteil, dass die Sicherheit gesteigert wird, wenn es wegen der PQC-Problematik erforderlich wird, symmetrische Verschlüsselungsalgorithmen mit AES 256 oder höher oder einem gleichwertigen anderen Verschlüsselungsalgorithmus einzusetzen. Es besteht nämlich nicht die Notwendigkeit, bei den verschiedenen Dienstleistern dieselben Schlüssel wie im Fahrzeug abspeichern zu müssen. Weiterhin ist es nicht erforderlich, eine Vielzahl von fahrzeugindividuellen Schlüsseln abspeichern zu müssen, weil die individuellen Schlüssel aus einem abgespeicherten Masterschlüssel abgeleitet werden können.

Bei dem Verfahren werden die mehreren von dem wenigstens einen definierten Masterschlüssel abgeleiteten kryptographischen Schlüssel für verschiedene Schlüsselzustände des Fahrzeugs von dem Masterschlüssel abgeleitet. Der Algorithmus der Schlüsselableitung wird so ausgelegt, dass er den Schlüsselzustand bei der Schlüsselableitung mitberücksichtigt. Der korrekte Schlüssel wird so nur dann korrekt abgeleitet, wenn auch der Schlüsselzustand bekannt ist. Die Sicherheit beruht darauf, dass der Masterschlüssel nicht übertragen wird. Ein Angreifer, der keinen Zugriff auf die Domänen-Masterschlüssel hat, kann somit auch mit dem Wissen der Masterschlüsselreferenz oder der Zustandsinformationen den echten Schlüssel nicht ableiten.

Alle Bedatungsvorgänge werden beim Hersteller verbucht und sind somit nachvollziehbar. Durch die Übermittlung des Schlüsselzustandes in der signierten Nachricht bei Anforderung einer Schlüsselerneuerung ist es möglich, dass der Hersteller nicht mehr dafür sorgen muss, dass die Dienstleister des Vertrauenskreises ebenfalls über die Schlüsselzustände der einzelnen Fahrzeuge informiert werden. Die Fahrzeuge liefern den aktuellen Schlüsselzustand mit, wenn sie eine abgesicherte Kommunikation insbesondere eine PQ-sichere Kommunikation mit einem Backend-Server beginnen wollen und die Backend-Server der Dienstleister des Vertrauenskreises können damit die korrekten Schlüssel ableiten, ohne dass der Hersteller ständig die Schlüsselzustände aller Fahrzeuge bei allen Dienstleistern des Vertrauenskreises mit seinen eigenen Aufzeichnungen synchronisieren muss.

Um die Authentizität der Nachricht feststellen zu können, mit der die Masterschlüssel-Referenz und der aktuelle Schlüsselzustand übertragen wird, wird in einer bevorzugten Ausführungsform diese Nachricht mit demjenigen kryptographischen Schlüssel signiert, der abgeleitet werden soll. Die Signatur wird also mit dem kryptographischen Schlüssel erzeugt. Dieser kryptographische Schlüssel entspricht auch dem gültigen aktuellen Schlüsselzustand des Fahrzeugs.

Nun haben das Fahrzeug und der Backend-Server einen gemeinsamen Schlüssel und können mit dessen Hilfe vertraulich und authentisch (verschlüsselt und signiert) kommunizieren, bspw. durch Anwendung des Verschlüsselungsalgorithmus AES 256-GCM.

Eine besonders vorteilhafte Form der Verwaltung der verschiedenen Schlüssel betrifft die Festlegung von Dienstleistungsdomänen für verschiedene Wirtschaftsbereiche anhand von einer oder mehreren der Kriterien Fahrzeugmarke, Fahrzeugmodell, Herstellungsjahr und Vertriebsland oder Vertriebsregion. So brauchen nicht alle Schlüsselsätze in jedem Rechenzentrum der verschiedenen Dienstleister verwaltet zu werden.

Weiterhin ist es vorteilhaft, wenn für verschiedene Dienstleister oder Dienstleistungsdomänen verschiedene Masterschlüssel definiert werden. Dann müssen dem jeweiligen Dienstleister nur seine ihm zugeordneten Masterschlüssel bekannt gegeben werden. Ein anderer Dienstleister kann mit den ihm bekannten Masterschlüsseln keine Schlüssel des ersten Dienstleisters ableiten.

Weiterhin ist es vorteilhaft, wenn der Schlüsselzustand des Fahrzeugs durch einen oder mehrere der Parameter Identitätszähler, Fahrzeugidentifikationsnummer, Baugruppentyp, Steuergerätetyp, Schlüsseltyp oder Typanlernzähler des Schlüsseltyps charakterisiert wird. So kann durch Angabe des Schlüsselzustandes die Auswahl auf verschiedene Schlüsseltypen und verschiedene Komponenten des Fahrzeugs beschränkt werden.

Es ist besonders vorteilhaft, wenn der externe Server des Dienstleisters wenigstens die Informationen über die Masterschlüsselreferenz und den Schlüsselzustand des Fahrzeugs an ein Sicherheits-Modul weiterleitet, das eine Ableitung des kryptographischen Schlüssel vornimmt und an den externen Server des Dienstleisters zurück überträgt.

Dafür ist es vorteilhaft, wenn das Sicherheits-Modul in Form eines Hardware-Sicherheitsmoduls die Ableitung des kryptographischen Schlüssel selbst vornimmt. So wird es zwar erforderlich, dass bei dem jeweiligen Dienstleister des Vertrauenskreises ein Hardwaremodul installiert werden muss. Diese sind aber besser gegen Fälschung gesichert als reine Softwareimplementierungen.

Für eine Vorrichtung zur Durchführung der Schlüsselableitung bei dem Verfahren zur geschützten Kommunikation eines Fahrzeugs mit einem Backend-Server eines Internet-Dienstleisters ist es vorteilhaft, wenn die Vorrichtung ein Sicherheits-Modul beinhaltet, mit dem eine Schlüsselableitung von einem gespeicherten Masterschlüssel, der in einer empfangenen Nachricht durch eine darin angegebene Masterschlüsselreferenz ausgewählt wird, erfolgt. Dabei ist die Vorrichtung weiter so ausgelegt, dass sie zur Schlüsselableitung weiterhin einen ebenfalls von dem Fahrzeug übertragenen Schlüsselzustand für die Schlüsselableitung berücksichtigt.

Das Sicherheits-Modul, das die Schlüsselableitung durchführt, kann als ein Hardware-Security-Modul HSM ausgestaltet sein. Diese können die Vertraulichkeit der Daten, also insbesondere der dort gespeicherten Masterschlüssel besser bewahren und können nicht so leicht gefälscht werden.

Schließlich ist es für ein Fahrzeug vorteilhaft, wenn es mit mindestens einer Recheneinheit ausgestattet ist, die einen geschützten Speicherbereich in einem Speicher aufweist, in dem mindestens ein kryptographischer Schlüssel abgespeichert ist, und dass darin oder in einem anderen Speicherbereich die Masterschlüsselreferenz und der Schlüsselzustand des Fahrzeugs abgespeichert wird.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Fig. 1: die prinzipielle Systemarchitektur für die mobilfunk-gestützte Kommunikation im Fahrzeug;
- Fig. 2: eine schematische Darstellung des Ablaufes des Vorgangs der gesicherten Einbringung eines oder mehrerer Schlüssel in ein konkretes Fahrzeug;
- Fig. 3: ein Blockschaltbild eines Infotainmentsystems eines Fahrzeugs;
- Fig. 4: eine schematische Darstellung des Ablaufes des Vorgangs der Schlüsselableitung für ein konkretes Fahrzeug, das mit einem Internet-Dienstleister kommuniziert; und
- Fig. 5: eine schematische Darstellung des Ablaufes einer geschützten Kommunikation zwischen Fahrzeug und einem Internet-Dienstleister.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

Mit dem Einzug moderner Kommunikationstechnik in die Fahrzeuge der Zukunft entwickeln sich die Fahrzeuge immer mehr zu Kommunikationszentralen, von denen aus vielerlei Arten von Dienstleistungen in Anspruch genommen werden können. Dabei werden in die Fahrzeuge auch immer mehr Zusatzdienste integriert, die von dem Hersteller des Fahrzeugs angeboten werden. Beispiele solcher Dienste sind Navigationsdienste, Sicherheitsdienste, wie Unfallwarnmeldungen und Pannenruf, Fernbedienungsdienste für die Programmierung der Aufladevorgänge von Elektrofahrzeugen, Klimatisierung, Abruf von Fahrzeugdaten und des Standort des Fahrzeugs usw. Auch die Werkstätten können eingebunden werden und Fahrzeuge in die Werkstatt rufen, bspw. bei Rückrufaktionen. Auch gibt es mittlerweile die Möglichkeit, einige Funktionen des Fahrzeugs, die per Software realisiert werden, von Zeit zu Zeit zu verbessern, was durch Software-Update geschehen kann. Derzeit findet das oft in der Werkstatt statt. Dies wird aber zukünftig vermehrt auch online durchgeführt, also über einen Download von einem Server im Internet, was auch als Download Over the Air (OTA) bezeichnet wird. Für diese Art von Kommunikationen ist es notwendig, abgesicherte Kommunikationsverfahren einzusetzen. Ein Teil der Sicherheit besteht darin, festzustellen, ob die Nachricht von einem berechtigten Nutzer stammt. Dieser Test soll Angreifer entlarven, die unberechtigter Weise versuchen, Zugang zu den Fahrzeugdaten, -funktionen usw. zu erlangen. Umgekehrt könnten Angreifer versuchen, unberechtigter Weise Zugang zu den angebotenen Dienstleistungen zu erlangen.

Nachfolgend wird erläutert, durch welche Maßnahmen die Kommunikation abgesichert wird.

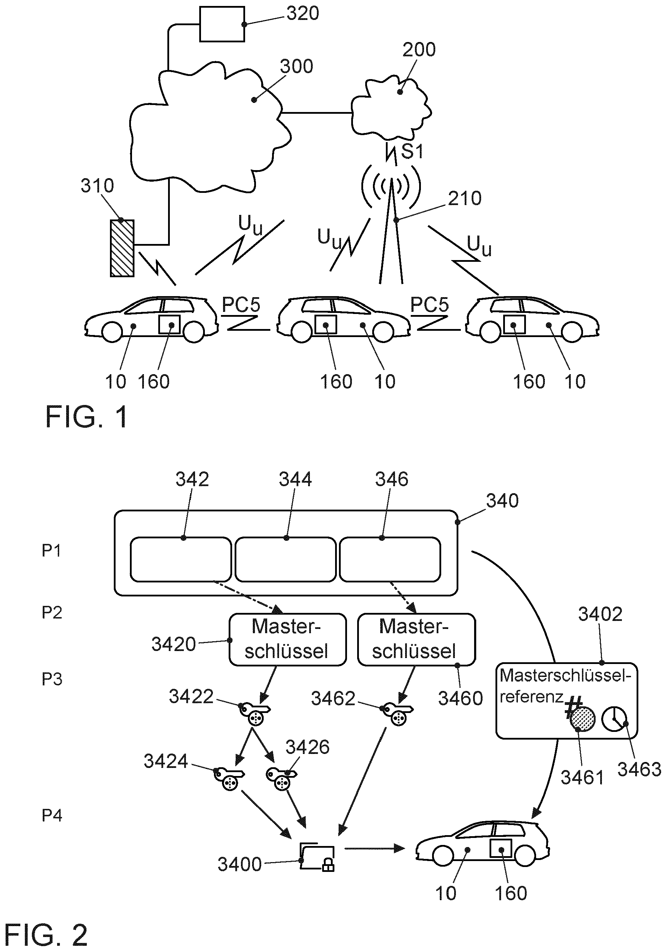

Fig. 1 zeigt zunächst die Systemarchitektur für die Fahrzeugkommunikation mittels Mobilfunk. Die Bezugszahl 10 bezeichnet ein Fahrzeug. Das dargestellte Fahrzeug ist als Personenkraftwagen ausgeführt. Dies soll nicht einschränkend gemeint sein, es kann sich um einen beliebigen Fahrzeugtyp handeln. Beispiele für andere Fahrzeugtypen sind: Nutzfahrzeuge, insbesondere Lastkraftwagen, Busse, Motorräder, Campingfahrzeuge, landwirtschaftliche Maschinen, Baumaschinen, Schienenfahrzeuge usw. Die Verwendung der Erfindung wäre generell in Landfahrzeugen, Schienenfahrzeugen, Wasserfahrzeugen und Flugzeugen möglich. Das Fahrzeug 10 ist mit einem On-Board-Kommunikationsmodul 160 mit entsprechender Antenneneinheit ausgestattet, so dass es an den verschiedenen Arten der Fahrzeugkommunikation Vehicle-to-Vehicle (V2V) und Vehicle-to-Everything (V2X) teilnehmen kann. Fig. 1 zeigt, dass das Fahrzeug 10 mit der Mobilfunk-Basisstation 210 eines MobilfunkAnbieters kommunizieren kann.

Eine solche Basisstation 210 kann eine eNodeB-Basisstation eines LTE-Mobilfunkanbieters (Long Term Evolution) sein. Die Basisstation 210 und die entsprechende Ausrüstung ist Teil eines Mobilfunk-Kommunikationsnetzwerks mit einer Vielzahl von Mobilfunkzellen, wobei jede Zelle von einer Basisstation 210 bedient wird.

Die Basisstation 210 ist nahe einer Hauptstraße positioniert, auf der die Fahrzeuge 10 fahren. In der Terminologie von LTE entspricht ein mobiles Endgerät einer Benutzerausrüstung UE, die es einem Benutzer ermöglicht, auf Netzwerkdienste zuzugreifen, wobei er sich über die Funkschnittstelle mit dem UTRAN oder dem Evolved-UTRAN verbindet. Typischerweise entspricht eine solche Benutzerausrüstung einem Smartphone. Solche mobilen Endgeräte werden von den Passagieren in den Fahrzeugen 10 verwendet. Zusätzlich sind die Fahrzeuge 10 jeweils mit einem On-Board-Kommunikationsmodul 160 ausgestattet. Dieses On-Board-Kommunikationsmodul 160 entspricht z.B. einem LTE-Kommunikationsmodul, mit dem das Fahrzeug 10 mobile Daten empfangen kann (Downlink) und solche Daten in Aufwärtsrichtung senden kann (Uplink). Dieses On-Board-Kommunikationsmodul 160 kann ferner mit einem WLAN p-Modul ausgestattet sein, um an einem Ad-hoc-V2X-Kommunikationsmodus teilnehmen zu können.

V2V und V2X Kommunikation wird aber auch durch die neue 5. Generation von Mobilfunksystemen unterstützt. Dort wird die entsprechende Funkschnittstelle als PC5 Schnittstelle bezeichnet. In Bezug auf das LTE-Mobilfunk-Kommunikationssystem besteht das Evolved UMTS Terrestrial Radio Access-Netzwerk E-UTRAN von LTE aus mehreren eNodeBs, die die E-UTRA-Benutzerebene (PDCP / RLC / MAC / PHY) und die Steuerebene (RRC) bereitstellen. Die eNodeBs sind mittels der sogenannten X2-Schnittstelle miteinander verbunden. Die eNodeBs sind auch über die sogenannte S1-Schnittstelle mit dem EPC (Evolved Packet Core) 200 verbunden.

Aus dieser allgemeinen Architektur zeigt Fig. 1, dass die Basisstation 210 über die S1-Schnittstelle mit dem EPC 200 verbunden ist und der EPC 200 mit dem Internet 300 verbunden ist. Ein Backend-Server 320, an den die Fahrzeuge 10 Nachrichten senden können und von diesem empfangen können, ist ebenfalls mit dem Internet 300 verbunden. Schließlich ist auch eine Straßeninfrastrukturstation 310 gezeigt. Diese kann beispielsweise durch eine straßenseitige Einheit, die im Fachjargon oft als Road Side Unit RSU 310 bezeichnet wird, veranschaulicht werden. Zur Vereinfachung der Implementierung wird davon ausgegangen, dass allen Komponenten eine Internetadresse zugewiesen wurde, typischerweise in Form einer IPv6-Adresse, so dass die Pakete, die Nachrichten zwischen den Komponenten transportieren, entsprechend geroutet werden können. Die erwähnten verschiedenen Schnittstellen sind standardisiert. Es wird diesbezüglich auf die entsprechenden LTE Spezifikationen verwiesen, die veröffentlicht sind.

Eine Maßnahme besteht in dem Gedanken, dass nicht die eigentlichen Schlüssel zwischen Backend-Server 320 und Fahrzeug 10 ausgetauscht werden, sondern die anzuwendenden Schlüssel sicher in das Fahrzeug 10 eingebracht werden und der jeweilige Backend-Server 320 nur eine Referenz zu einem Masterschlüssel geliefert bekommt, aus der er den eigentlichen Schlüssel ableiten kann.

Fig. 2 zeigt, wie die Schlüssel in das Fahrzeug 10 sicher eingebracht werden können. Der ganze Vorgang findet im Einflussbereich des Fahrzeugherstellers statt. Das kann z.B. beim Produktionsprozess des Fahrzeugs 10 im Rahmen einer Endkontrolle stattfinden. Mit der Bezugszahl 340 ist eine Zusammenstellung der möglichen Dienstleistungsdomänen bezeichnet. Zum Beispiel kann diese Zusammenstellung in einem Rechenzentrum des Fahrzeugherstellers in Form einer Datenbank vorliegen. Es sind drei verschiedene Dienstleistungsdomänen dargestellt, die mit den Bezugszahlen 342, 344, 346 bezeichnet sind. Die Dienstleistungsdomänen können nach verschiedenen Kriterien definiert werden. Als Beispiele werden genannt die jeweilige Marke eines Fahrzeugherstellers, das jeweilige Produktionsjahr sowie die jeweilige Vertriebsregion oder das jeweilige Vertriebsland. Weitere oder auch andere Kriterien können zur Einteilung der verschiedenen Dienstleistungsdomänen eingesetzt werden. Allgemein können verschiedene unterschiedliche Anwendungsbereiche wie Onlinedienste, Basic Security-Dienste, Fahrerassistenz- und Infotainmentdienste den Dienstleistungsdomänen zugeordnet sein. Die Domäne 342 wird auch als Fahrzeug-Schlüssel-Managementsystem bezeichnet. Ihre Dienste werden immer in Anspruch genommen, wenn das Fahrzeug 10 im Laufe der Betriebszeit mit neuen Schlüsseldaten programmiert werden soll. Die Domäne 344 kann z.B. die Vergabe der Zugangsschlüssel zum Öffnen des Fahrzeugs betreffen. Die Domäne 346 betrifft eine Domäne für ein bestimmtes Fahrzeugmodell und ein bestimmtes Modelljahr. Von diesen Domänen werden bei einem großen Fahrzeughersteller viele verschiedene Domänen existieren. Bei der Produktion werden jetzt alle diejenigen Schlüssel zusammengestellt und in das Fahrzeug 10 einprogrammiert, die es benötigt, um auf die verschiedenen Dienstleistungen, zu denen es berechtigt ist, zugreifen zu können. Im ersten Schritt P1 werden die verschiedenen Masterschlüsselgruppen 342, 344, 346 der für das Fahrzeug 10 vorgesehenen Dienstleistungsdomänen zusammengestellt. Von den drei gezeigten Dienstleistungsdomänen werden die Masterschlüsselgruppen für die Domänen 342 und 346 ausgewählt, nicht aber von der Domäne 344. Im zweiten Schritt P2 werden die Masterschlüssel 3420 und 3460 der ausgewählten Masterschlüsselgruppen 342, 346 fahrzeugindividuell ausgewählt. Dazu kann die Fahrzeugidentifikationsnummer (FIN) herangezogen werden. Im dritten Schritt P3 erfolgt die eigentliche Generierung der fahrzeugindividuellen Schlüssel aus den Masterschlüsseln. Es ist der Fall gezeigt, dass das gezeigte Fahrzeug 10 berechtigt ist, für zwei verschiedene Dienstleistungsdomänen. Deshalb werden auch die kryptographischen Schlüssel von zwei verschiedenen Masterschlüsseln 3420 und 3460 abgeleitet. Dabei ist links gezeigt, dass zunächst ein generischer Schlüssel 3422 abgeleitet wird und von diesem wiederum zwei verschiedene kryptographische Schlüssel 3424 und 3426 abgeleitet werden. Die Algorithmen zur Schlüsselableitung aus den Masterschlüsseln und den generischen Schlüsseln sind bekannt. Dafür können z.B. die Algorithmen nach NIST SP 800-108 entsprechend der "Recommendation for Key Derivation Using Pseudorandom Functions" eingesetzt werden. Es wurde bereits erwähnt, dass die Schlüssel fahrzeugindividuell sind. Es wird aber erwähnt, dass auch Steuergeräte-individuelle Schlüssel vergeben werden. Als Beispiel werden die Schlüssel 3424 und 3426 gezeigt. Die Schlüssel werden vorzugsweise mit einer Länge von 256 Bit erstellt, so dass sie auch für die PQ-Zeit noch als sicher gelten. Es wird das AES-Verfahren, entsprechend Advanced Encryption Standard, als Verschlüsselungsverfahren eingesetzt. Der Fachmann kennt das Verfahren aus einschlägigen Veröffentlichungen, außerdem ist das AES-Verfahren standardisiert. Alle so erzeugten Schlüssel werden im Schritt P4 in einer Schlüssel-Datei 3400 zusammengestellt und in das Fahrzeug 10 eingebracht. Die Schlüsseldatei wird in einen besonders geschützten Speicherbereich einer Recheneinheit eingeschrieben. Zusätzlich wird erfindungsgemäß eine Masterschlüsselreferenz für jeden Masterschlüssel 3420 und 3460, der für das Fahrzeug 10 zur Schlüsselgenerierung benutzt wurde, erzeugt. Die Masterschlüsselreferenzen werden ebenfalls in einer MKR-Datei 3402 zusammengefasst und in den geschützten Speicherbereich geschrieben. Ein Beispiel-Format für den Aufbau der MKR-Datei ist in Fig. 2 gezeigt. Die Masterschlüsselreferenzen werden in einem Datenfeld der MKR-Datei 3402 abgelegt. In das Datenfeld wird als Krypto-Region das Zielland oder die Zielregion eingetragen, in die das Fahrzeug ausgeliefert wird. Auch der geltende Schlüsselzustand 3463 wird in der MKR-Datei 3402 mit übertragen. Für jede Domäne gibt es einen eigenen Masterschlüssel. Es können Schlüssel aus mehreren Domänen in dem Datenfeld enthalten sein. Das Datenfeld kann als Download Link Container (DLC) gestaltet werden.

Alle Bedatungsvorgänge werden beim Hersteller verbucht und sind somit nachvollziehbar. Durch die Übermittlung des Schlüsselzustandes in der MKR-Datei bei Anforderung einer Schlüsselerneuerung ist es möglich, dass der Hersteller nicht mehr dafür sorgen muss, dass die Dienstleister des Vertrauenkreises ebenfalls über die Schlüsselzustände der einzelnen Fahrzeuge informiert werden. Die Fahrzeuge liefern den aktuellen Schlüsselzustand mit, wenn sie eine Schlüsselerneuerung anfordern und können dann die korrekten Schlüssel ableiten, ohne dass der Hersteller ständig die Schlüsselzustände bei allen Dienstleistern (des Vertrauenskreises) mit der eigenen Datenbank synchronisiert. Die Bedatungsvorgänge umfassen sowohl die Erstbedatung als auch eine Mehrfachbedatung, das heißt eine erneute Bedatung eines bereits bedateten Fahrzeugs. Eine Mehrfachbedatung ist zum Beispiel notwendig, falls ein bereits bedatetes Fahrzeug/Steuergerät in einen anderen Verbund von Teilnehmern getauscht werden soll, oder ein Schlüssel des Teilnehmers getauscht werden muss.

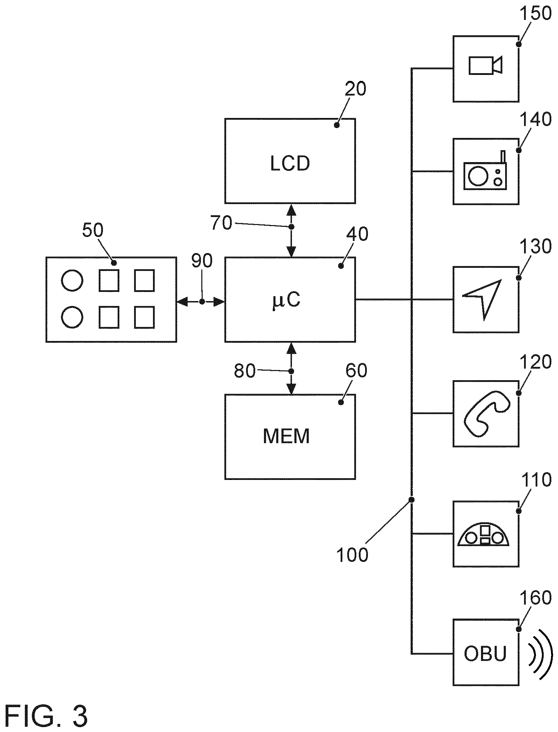

Fig. 3 zeigt schematisch ein Blockschaltbild des Infotainmentsystems des Fahrzeugs 10 sowie beispielhaft einige Teilsysteme oder Applikationen des Infotainmentsystems. So umfasst die Bedienungs-Vorrichtung die berührungsempfindliche Anzeigeeinheit 30, eine Recheneinrichtung 40, eine Eingabeeinheit 50 und einen Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 30 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für die möglichen Einblendungen von Zusatzinformationen.

Die weiteren Teile des Infotainmentsystems Kamera 150, Radio 140, Navigationsgerät 130, Telefon 120 und Kombiinstrument 110 sind über den Datenbus 100 mit der Vorrichtung zur Bedienung des Infotainmentsystems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbildern/s entspricht. Alternativ kann eine Spezialkamera eingesetzt werden, die mehr Bilder/s aufnimmt, um die Genauigkeit der Objekterkennung bei sich schneller bewegenden Objekten zu erhöhen, oder die Licht in einem anderen als dem sichtbaren Spektrum aufnimmt. Es können mehrere Kameras zur Umfeldbeobachtung eingesetzt werden. Daneben könnten auch noch weitere erwähnte RADAR- oder LIDAR-Systeme ergänzend oder alternativ eingesetzt werden, um die Umfeldbeobachtung durchzuführen oder zu erweitern. Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc. An den Datenbus 100 kann auch noch ein Gateway angeschlossen werden (nicht dargestellt), das mit einem oder mehreren weiteren Datenbussen verbunden ist. Daran können einige Steuergeräte (nicht dargestellt) angeschlossen sein.

Die Dateien 3400 und 3402 werden z.B. in dem Speicher 60 der Recheneinheit 40 abgespeichert. Dazu kann eine Schnittstelle des Infotainmentsystems benutzt werden, z.B. eine USB-Schnittstelle, die typischerweise im Cockpit des Fahrzeugs verfügbar gestellt wird. Der Speicher 60 kann einen nichtflüchtigen Speicherbereich beinhalten, der z.B. als EEPROM oder FEPROM ausgebildet ist. Statt der USB-Schnittstelle können die Dateien 3400 und 3402 alternativ direkt "Over the Air" (OTA) übertragen werden. Sie werden dann von dem Kommunikationsmodul 160 empfangen und zu der Recheneinheit 40 weitergeleitet und in den Speicher 60 geschrieben.

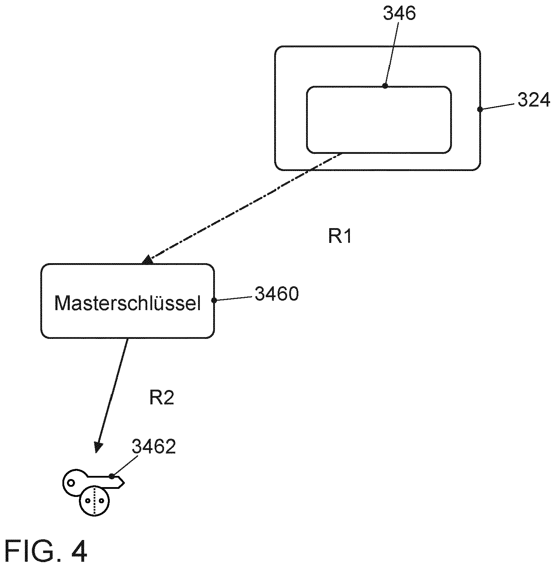

Fig. 4 zeigt den schematisch den Vorgang, nach dem in einem Backend-Server 320 eines Dienstleisters die Schlüssel berechnet werden, wenn die gesicherte Kommunikation durchgeführt werden soll. Den verschiedenen Dienstleistungs-Domänen werden die zugehörigen Domänen-Masterschlüsselgruppen zur Verfügung gestellt. Aus der Domänen-Masterschlüsselgruppe 346 wird im Schritt R1 der für das anfragende Fahrzeug 10 passende Masterschlüssel 3460 ausgewählt. Wie dies vonstattengeht, wird nachfolgend noch genauer erläutert. Von dem Masterschlüssel wird im Schritt R2 der benötigte Kommunikationsschlüssel 3462 abgeleitet. Die Schlüsselableitungsmodelle werden prinzipiell als bekannt vorausgesetzt. Als Beispiel wird auf die parallele Anmeldung EP 3 157 281 A1 Bezug genommen. Der bei dem Backend-Server 320 erzeugte Kommunikationsschlüssel steht dann für die sichere Kommunikation mit den Fahrzeug zur Verfügung.

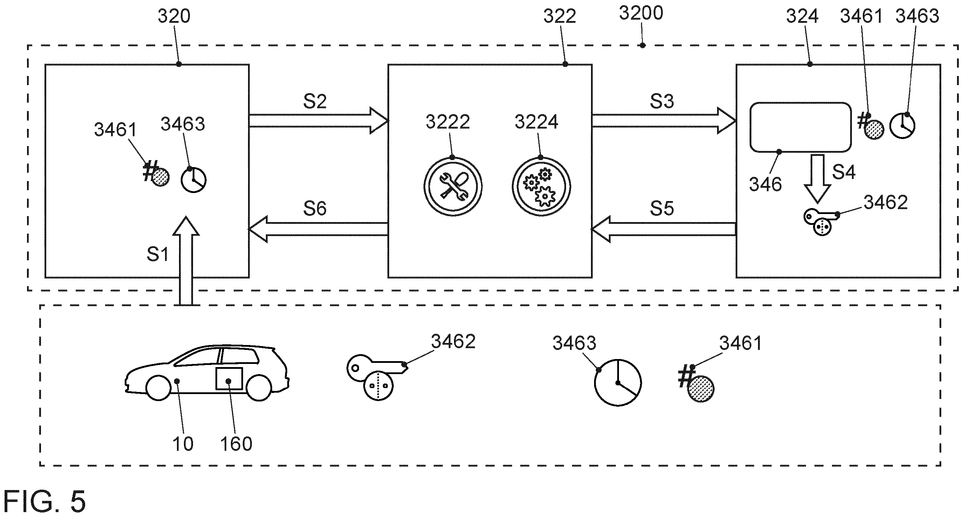

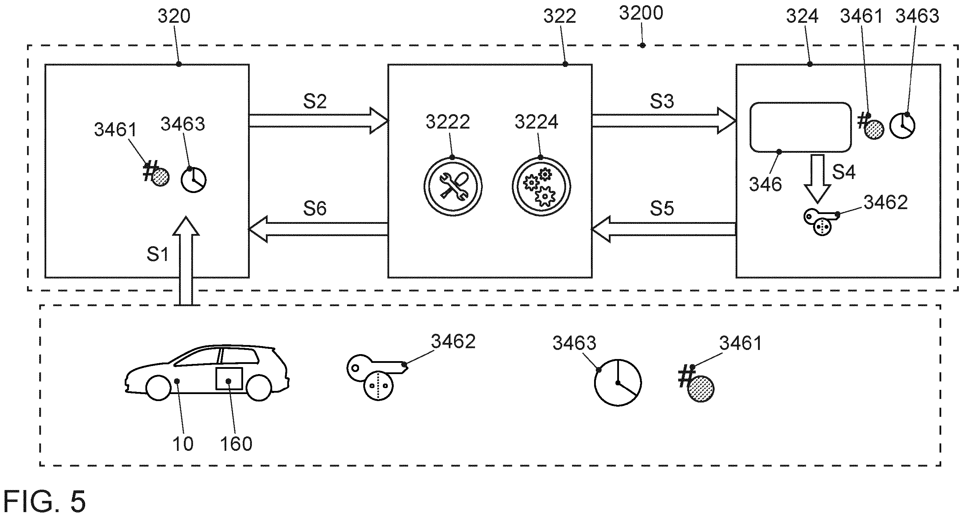

In Fig. 5 ist der genaue Ablauf der gesicherten Kommunikation schematisch dargestellt. Im Schritt S1 sendet das Fahrzeug 10 eine Anfrage zu einem Backend-Server 320 eines Dienstleisters 3200, der zu dem Vertrauenskreis des Fahrzeugherstellers zählt. Es kann sich um eine Anfrage nach dem HTTPS-Protokoll handeln, das über die Internetanbindung des Mobilfunksystems, in das das Fahrzeug 10 eingebucht ist, zu dem Backend-Server 320 gelangt. In der Anfrage oder in einer nachfolgenden Nachricht nach Einrichtung der Verbindung zu dem Backend-Server 320 wird ein Datensatz mit der Masterschlüssel-Referenz 3461 und dem aktuellen Schlüsselzustand 3463 an den Backend-Server 320 übertragen. Der Backend-Server 320 nutzt die dort installierte CSP-Software 322, entsprechend Cryptographic Service Provider, um die Informationen umzusetzen und die relevanten Daten des Datensatzes zu extrahieren. Dafür wird die Software-Komponente 3222 benutzt, nachdem der Datensatz an die CSP-Software 322 im Schritt S2 geliefert wurde. Die extrahierten Daten, nämlich die Masterschlüssel-Referenz 3461 und der aktuellen Schlüsselzustand 3463, werden im Schritt S3 an ein HSM-Modul 324 geliefert, entsprechend Hardware-Security Modul. Dieses Modul ist beim Dienstleister aufgestellt. Alternativ kann es an einem anderen Standort des Dienstleister stehen, zu dem aber eine eigene Datenverbindung, die nicht über das Internet geroutet wird, besteht. In dem HSM-Modul 324 ist die Masterschlüsselgruppe 346 des Dienstleisters hinterlegt. Im Schritt S4 wird mit Hilfe der Masterschlüssel-Referenz 3461 und dem aktuellen Schlüsselzustand 3463 der gültige Masterschlüssel 3460 aus der Masterschlüsselgruppe 346 ausgewählt, und davon der Kommunikationsschlüssel 3462 abgeleitet. Dies geschieht wie im Zusammenhang mit Fig. 4 beschrieben. Der abgeleitete Schlüssel wird im Schritt S5 zur CSP-Software 322 übertragen, die den Schlüssel 3462 nutzt, um die gesicherte Kommunikation mit dem Fahrzeug 10 zu authentifizieren oder ggfs. zu entschlüsseln. Auch die Antworten an das Fahrzeug 10 können mit Hilfe dieses Kommunikationsschlüssels verschlüsselt werden. Dazu ist in der CSP-Software die Schlüsselnutzungskomponente 3224 installiert. Für die gesicherte Kommunikation werden auch Zertifikate 3464 und 3466 eingesetzt, mit denen die Nachrichten signiert werden, um die Sicherheit zu erhöhen, indem bescheinigt wird, dass die gelieferten Daten von dem Fahrzeug 10 stammen.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise werden das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

### Bezugszeichenliste

- 10: Fahrzeug
- 30: berührungsempfindliche Anzeigeeinheit
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Kombiinstrument
- 120: Telefon
- 130: Navigationsgerät
- 140: Radio
- 150: Kamera
- 160: Kommunikationsmodul
- 170: Fahrzeug-Messeinheit
- 200: Evolved Packet Core
- 210: Basisstation
- 300: Internet
- 310: Road Side Unit
- 320: Backend-Server
- 322: CSP-Software
- 324: HSM-Modul
- 340: Dienstleistungsdomänen
- 342: 1. Masterschlüsselgruppe
- 344: 2. Masterschlüsselgruppe
- 346: 3. Masterschlüsselgruppe
- 3200: Dienstleister
- 3222: 1. Software-Komponente
- 3224: Schlüsselnutzungskomponente
- 3400: Schlüsseldatei
- 3402: MKR-Datei
- 3420: 1. Masterschlüssel
- 3422: generischer Schlüssel
- 3424: 1. kryptographischer Schlüssel
- 3426: 2. kryptographischer Schlüssel
- 3460: 2. Masterschlüssel
- 3461: Masterschlüsselreferenz
- 3462: 3. kryptographischer Schlüssel
- 3463: Schlüsselzustand
- P1 - P4: verschiedene Schritte eines Verfahrens zur Schlüsselableitung
- S1 - S6: verschiedene Schritte eines Verfahrens zur geschützten Kommunikation eines Fahrzeugs

## Patentansprüche

1. Verfahren zur geschützten Kommunikation eines Fahrzeugs (10) mit einem externen Server (320) **dadurch gekennzeichnet, dass** das Verfahren die folgenden Schritte umfasst:
- Definieren einer Anzahl von Masterschlüsseln (3420, 3460),
- Erzeugen von Masterschlüsselreferenzen (3461) für Masterschlüssel (3420, 3460), die für das Fahrzeug (10) zur Schlüsselgenerierung benutzt wurden,
- Einbringen eines von dem einen der definierten Masterschlüssel (3420, 3460) abgeleiteten kryptographischen Schlüssels (3422, 3462) und der für den einen der definierten Masterschlüssel (3420, 3460) erzeugten Masterschlüsselreferenz (3461) und eines Schlüsselzustands (3463) in das Fahrzeug (10), wobei der Schlüsselzustand bei der Ableitung des kryptographischen Schlüssels (3422, 3462) mitberücksichtigt worden ist,
- Übertragen einer mit dem abgeleiteten kryptographischen Schlüssel (3422, 3462) signierten Nachricht, die zusätzlich mit der Masterschlüsselreferenz (3461) und dem Schlüsselzustand des Fahrzeugs (10) versehen ist, von dem Fahrzeug (10) zu einem externen Server (320),
- Ableiten des kryptographischen Schlüssels (3462) bei dem externen Server (320) von dem Masterschlüssel, der durch die Masterschlüsselreferenz (3461) identifiziert wird, in Abhängigkeit von dem Schlüsselzustand des Fahrzeugs (10), wobei der Masterschlüssel vorab mittels eines sicheren Bedatungsprozesses in den externen Server (320) eingespielt worden ist,
- Überprüfen der Authentizität der signierten Nachricht mit dem abgeleiteten kryptographischen Schlüssel (3462) bei dem externen Server.

2. Verfahren nach Anspruch 1, **dadurch gekennzeichnet, dass** die Signierung der Nachricht mit demjenigen kryptographischen Schlüssel (3422, 3462) erfolgt, der dem aktuellen Schlüsselzustand (3463) des Fahrzeugs (10) entspricht.

3. Verfahren nach einem der vorhergehenden Ansprüche, **dadurch gekennzeichnet, dass** die Anzahl von Masterschlüsseln (3420, 3460) für verschiedene Dienstleistungsdomänen im Einflussbereich eines Fahrzeugherstellers definiert werden, wobei die Dienstleistungsdomänen anhand von einer oder mehreren der Kriterien Fahrzeugmarke, Fahrzeugmodell, Herstellungsjahr und Vertriebsland unterschieden werden.

4. Verfahren nach einem der vorhergehenden Ansprüche, wobei für verschiedene Dienstleister oder Dienstleistungsdomänen verschiedene Masterschlüssel (3420, 3460) definiert werden.

5. Verfahren nach einem der vorhergehenden Ansprüche, **dadurch gekennzeichnet, dass** der externe Server (320) wenigstens die Informationen über die Masterschlüsselreferenz (3461) und den Schlüsselzustand (3463) des Fahrzeugs (10) an einen Krypto-Dienstleister weiterleitet, der eine Ableitung des kryptographischen Schlüssel (3422, 3462) vornimmt und an den externen Server (320) zurück überträgt.

6. Verfahren nach einem der vorhergehenden Ansprüche, **dadurch gekennzeichnet, dass** der Krypto-Dienstleister die Ableitung des kryptographischen Schlüssel (3422, 3462) selbst mit Hilfe eines Hardware-Sicherheitsmoduls (324) vornimmt oder an einen weiteren Krypto-Dienstleister sendet, der die Ableitung des kryptographischen Schlüssel (3422, 3462) mit Hilfe des Hardware-Sicherheitsmoduls (324) vornimmt.

7. Verfahren nach einem der vorhergehenden Ansprüche, **dadurch gekennzeichnet, dass** die kryptographischen Schlüssel (3422, 3462) fahrzeugindividuell abgeleitet werden mit Hilfe der Fahrzeugidentifikationsnummer.

8. Verfahren nach einem der Ansprüche 4 bis 7, **dadurch gekennzeichnet, dass** der Schlüsseltyp die Eigenschaften des Schlüssels und den Ableitungspfad bestimmt.

9. System, das ein Fahrzeug und einen Server behaltet, wobei das Fahrzeug und der Server eingerichtet sind, ein Verfahren nach einem der Ansprüche 1 bis 8 auszuführen.

10. System nach Anspruch 9, wobei der Server ein Sicherheits-Modul (324) beinhaltet, mit dem das Ableiten des kryptographischen Schlüssels (3462) von einem gespeicherten Masterschlüssel (3460), der in einer empfangenen Nachricht durch eine darin angegebene Masterschlüsselreferenz (3461) ausgewählt wird, erfolgt.

11. System nach Anspruch 10, wobei das Sicherheits-Modul (324) ein Hardware-Security-Modul HSM ist.

## Claims

1. Method for protected communication between a vehicle (10) and an external server (320), **characterized in that** the method comprises the following steps:
- defining a number of master keys (3420, 3460),
- generating master key references (3461) for master keys (3420, 3460) which were used for key generation for the vehicle (10),
- introducing a cryptographic key (3422, 3462), derived from said one of the defined master keys (3420, 3460), and the master key reference (3461) generated for said one of the defined master keys (3420, 3460), and a key state (3463) to the vehicle (10), the key state having been concomitantly taken into account in the derivation of the cryptographic key (3422, 3462),
- transmitting a message signed with the derived cryptographic key (3422, 3462), said message additionally being provided with the master key reference (3461) and the key state of the vehicle (10), from the vehicle (10) to an external server (320),
- deriving the cryptographic key (3462) at the external server (320) from the master key identified by the master key reference (3461) depending on the key state of the vehicle (10), the master key having been previously imported into the external server (320) by means of a secure data providing process,
- checking the authenticity of the signed message with the derived cryptographic key (3462) at the external server.

2. Method according to Claim 1, **characterized in that** the message is signed with that cryptographic key (3422, 3462) which corresponds to the current key state (3463) of the vehicle (10).

3. Method according to either of the preceding claims, **characterized in that** the number of master keys (3420, 3460) are defined for different service domains within the scope of influence of a vehicle manufacturer, the service domains being differentiated on the basis of one or more of the criteria of vehicle make, vehicle model, year of manufacture, and distribution country.

4. Method according to any of the preceding claims, wherein different master keys (3420, 3460) are defined for different service providers or service domains.

5. Method according to any of the preceding claims, **characterized in that** the external server (320) forwards at least the information about the master key reference (3461) and the key state (3463) of the vehicle (10) to a cryptographic service provider, which performs a derivation of the cryptographic key (3422, 3462) and transmits it back to the external server (320).

6. Method according to any of the preceding claims, **characterized in that** the cryptographic service provider performs the derivation of the cryptographic key (3422, 3462) itself with the aid of a hardware security module (324), or sends it to a further cryptographic service provider, which performs the derivation of the cryptographic key (3422, 3462) with the aid of the hardware security module (324).

7. Method according to any of the preceding claims, **characterized in that** the cryptographic keys (3422, 3462) are derived in vehicle-specific fashion with the aid of the vehicle identification number.

8. Method according to any of Claims 4 to 7, **characterized in that** the key type determines the properties of the key and the derivation path.

9. System including a vehicle and a server, wherein the vehicle and the server are configured to carry out a method according to any of Claims 1 to 8.

10. System according to Claim 9, wherein the server includes a security module (324) used to derive the cryptographic key (3462) from a stored master key (3460), which is selected in a received message by way of a master key reference (3461) specified therein.

11. System according to Claim 10, wherein the security module (324) is a hardware security module HSM.

## Revendications

1. Procédé de communication protégée d'un véhicule (10) avec un serveur externe (320), **caractérisé en ce que** le procédé comprend les étapes suivantes consistant à :
- définir un certain nombre de clés principales (3420, 3460),
- générer des références de clé principale (3461) pour des clés principales (3420, 3460) qui ont été utilisées pour le véhicule (10) pour la génération de clé,
- introduire une clé cryptographique (3422, 3462) dérivée de ladite une des clés principales définies (3420, 3460) et la référence de clé principale (3461) générée pour ladite une des clés principales définies (3420, 3460) et un état de clé (3463) dans le véhicule (10), l'état de clé ayant également été pris en compte lors de la dérivation de la clé cryptographique (3422, 3462),
- transférer du véhicule (10) à un serveur externe (320) un message signé par la clé cryptographique dérivée (3422, 3462), et qui est en plus muni de la référence de clé principale (3461) et de l'état de clé du véhicule (10),
- dériver la clé cryptographique (3462) au niveau du serveur externe (320) de la clé principale qui est identifiée par la référence de clé principale (3461) en fonction de l'état de clé du véhicule (10), dans lequel la clé principale a d'abord été importée dans le serveur externe (320) au moyen d'un processus de paramétrisation sûr,
- vérifier auprès du serveur externe l'authenticité du message signé avec la clé cryptographique dérivée (3462).

2. Procédé selon la revendication 1, **caractérisé en ce que** la signature du message est effectuée avec la clé cryptographique (3422, 3462) qui correspond à l'état de clé actuel (3463) du véhicule (10).

3. Procédé selon l'une quelconque des revendications précédentes, **caractérisé en ce que** le nombre de clés principales (3420, 3460) est défini pour différents domaines de prestation de service dans la zone d'influence d'un fabricant de véhicule, dans lequel les domaines de prestation de service se distinguent par un ou plusieurs des critères de marque de véhicule, de modèle de véhicule, d'année de fabrication et de pays de commercialisation.

4. Procédé selon l'une quelconque des revendications précédentes, dans lequel différentes clés principales (3420, 3460) sont définies pour différents prestataires de service ou pour différents domaines de prestation de service.

5. Procédé selon l'une quelconque des revendications précédentes, **caractérisé en ce que** le serveur externe (320) retransmet au moins les informations concernant la référence de clé principale (3461) et l'état de clé (3463) du véhicule (10) à un prestataire de service cryptographique qui procède à une dérivation de la clé cryptographique (3422, 3462) et la retransfère au serveur externe (320).

6. Procédé selon l'une quelconque des revendications précédentes, **caractérisé en ce que** le prestataire de service cryptographique procède lui-même à la dérivation de la clé cryptographique (3422, 3462) à l'aide d'un module de sécurité matériel (324) ou l'envoie à un autre prestataire de service cryptographique qui procède à la dérivation de la clé cryptographique (3422, 3462) à l'aide du module de sécurité matériel (324).

7. Procédé selon l'une quelconque des revendications précédentes, **caractérisé en ce que** les clés cryptographiques (3422, 3462) sont dérivées individuellement par véhicule à l'aide du numéro d'identification du véhicule.

8. Procédé selon l'une quelconque des revendications 4 à 7, **caractérisé en ce que** le type de clé détermine les propriétés de la clé et le chemin de dérivation.

9. Système comprenant un véhicule et un serveur, le véhicule et le serveur étant conçus pour exécuter un procédé selon l'une quelconque des revendications 1 à 8.

10. Système selon la revendication 9, dans lequel le serveur comprend un module de sécurité (324) à l'aide duquel la dérivation de la clé cryptographique (3462) est effectuée à partir d'une clé principale mémorisée (3460) qui est sélectionnée dans un message reçu par une référence de clé principale (3461) indiquée dans celui-ci.

11. Système selon la revendication 10, dans lequel le module de sécurité (324) est un module de sécurité matériel HSM.
